# EUROPEAN PATENT APPLICATION

(11) **EP 3 643 680 A1**
(43) Date of publication of application: **29.04.2020**
(21) Application number: 18202168.3
(22) Date of filing: 23.10.2018
(51) Int. Cl.: C01B 33/023, C01B 33/037, C01F 7/16, C01F 7/18

(54) **COUPLED PRODUCTION OF HIGH PURITY SILICON AND ALUMINA**

(71) Applicant: SiQAl UG (haftungsbeschränkt), 12103 Berlin (DE)
(72) Inventor: BARTEL, Til, 12103 Berlin (DE); HEUER, Matthias, 12555 Berlin (DE)
(74) Representative: Schulz Junghans Patentanwälte PartGmbB

(57) **Abstract**

The invention relates to a process for the production of silicon and alumina. Aluminium is contacted with a molten slag of a calcium oxide and SiO₂ under conditions facilitating an aluminothermic reaction, thereby forming silicon and an aluminate slag in two phases which are separated. The aluminate slag is converted to alumina and calcium oxide, which is re-fed in the reaction. The aluminium is provided by melting of aluminium scrap or a combination of different aluminium alloys at a temperature of 700 to 1000°C. The primary aluminium melt is adjusted to a content of 8 to 14% of silicon and then cooled to below 660°C, whereby precipitates are formed, and high purity aluminium is obtained to be introduced into the reaction.

## Description

The present invention relates to a process for the production of silicon and alumina (aluminium oxide), particularly for the production of silicon and alumina in high purity. The process of the invention is energy and resource saving in comparison to existing processes for the production of high purity silicon and alumina, as it comprises internal recycling loops to recover and reuse key materials of the process.

Solar cells play a key role in the transition of energy generation from non-renewable resources to energy generation from emission free and renewable resources. High purity aluminium oxide and silicon are resources that are required in the production of light emitting diodes and solar cells. However, their generation is according to the state of the art cost- and energy intensive.

In order to be usable in the solar cell production, silicon needs to be purified from other elements to achieve at least 6N purity (which refers to 99.9999% silicon). This has prompted the development of complicated chemical purification processes like the Siemens process. Alternatively impurities can be removed readily either via simple metallurgical treatments such as slag treatments or segregation during directional solidification. The development of metallurgical purification of silicon has been developed in the last decades to provide cost efficient methods to produce high volumes of material.

High purity aluminium oxide is required in the electronic industry, for example in the production of LEDs or displays. Aluminium oxide is commonly produced with hydrometallurgical methods but only in 98-99% purity, which is not sufficient for use in electronic applications that necessitate purity above 99%. In particular, the use in electronics is hampered by an excessive concentration of the elements sodium, iron and other impurities carried in from the production process using natural raw material.

Currently, aluminium oxide is transformed to aluminium metal, purified and then oxidized to obtain high purity aluminium oxide. This is wasteful, expensive and inefficient.

Based on the above mentioned state of the art, the objective of the present invention is to provide means and methods of a process for the coupled production of silicon and aluminium oxide in high purity. This objective is attained by the claims of the present specification.

### Background of the invention

The following US-patents and patent applications are incorporated herein by reference: US1618105, US4634581, and US4457903.

### Terms and definitions

The term *aluminium* in the context of the present specification relates to pure aluminium as well as to alloys and mixtures containing aluminium. One particular source of aluminium of the present invention is aluminium scrap.

The term *silicon* in the context of the present specification relates to pure silicon as well as to silicon that contains impurities and mixtures comprising silicon.

The terms *alumina, aluminium oxide* and aluminium(III)oxide in the context of the present specification are used synonymously and relate to the compound of the general formula Al₂O₃.

The term *silicon dioxide* and *silica* are used synonymously within the present specification and relate to the compound of the formula SiO₂. Main sources for silicon dioxide used in the present invention comprise quartz as well as quartz sand.

The terms *aluminium hydroxide* and *aluminium(III)hydroxide* are used synonymously within the present specification and relate to the compound of the formula Al(OH)₃.

The terms *aluminium chloride* and *aluminium(III)chloride* are used synonymously within the present specification and relate to the compound of the formula AlCl₃.

The terms *aluminium chloride hexahydrate* and *aluminium(III)chloride hexahydrate* are used synonymously within the present specification and relate to the compound of the formula AlC₃·6H₂O.

The term *alkaline earth metal oxide aluminate slag* in the context of the present specification relates to a composition comprising an alkaline earth metal oxide and an aluminium oxide. In some exemplary (but not limiting) embodiments, the composition can be described by a general formula (MO)₁₂·(Al₂O₃)₇, whereby M refers to the alkaline earth metal, and Al and O have the common atomic symbol meanings.

The terms *aluminothermic reduction* and *aluminothermic reaction* are used synonymously in the context of the present specification and relate to the reduction of silicon dioxide to silicon of oxidation state 0 in the presence of aluminium, whereby aluminium is oxidized during this reaction.

The term *Pedersen process* in the context of the present specification relates to a conversion of an alkaline earth metal oxide aluminate slag to aluminium(III)hydroxide and alkaline earth metal carbonate.

The term *alkaline earth metal* or *group 2 metal* in the context of the present specification relates to the alkaline earth metals beryllium, magnesium, calcium, strontium and barium, particularly to magnesium, calcium, strontium and barium, even more particularly to calcium. The term *transition metal* in the context of the present specification relates in particular to transition metals from groups 4, 5, 6, 7, 8, 9, 10 and 11 of the periodic system of elements.

The term *alkali metal* in the context of the present specification relates in particular to the alkali metals sodium and potassium.

### Detailed description of the invention

The invention relates to a process for the production of silicon and alumina from aluminium and/or secondary aluminium containing sources and silicon dioxide, in particular in the form of quartz sand comprising the following steps:
In an aluminothermic step, contacting an aluminium metal with
   - a molten slag comprising an alkaline earth metal oxide and a silicon dioxide, or
   - an alkaline earth metal oxide and a silicon dioxide under conditions facilitating an aluminothermic reaction; thereby forming silicon of oxidation state 0 and an alkaline earth metal oxide aluminate slag in separate phases;
separating the silicon and the alkaline earth metal oxide aluminate slag in a separation step;
in a conversion step, converting the alkaline earth metal oxide aluminate slag to alumina and alkaline earth metal oxide, wherein said alkaline earth metal oxide is re-fed into the process in the aluminothermic step;
characterized in that
the aluminium metal of the aluminothermic step is provided by a procedure comprising the steps of
   a. melting of aluminium scrap or a combination of different aluminium alloys to yield a primary aluminium melt, particularly at a temperature of 700 to 1000°C, more particularly 800 to 900°C;
   b. adjusting said primary aluminium melt to a content of
      - 8 to 14% (w/w) of silicon, particularly 11.5% (w/w) to 12.5% (w/w) of silicon, more particularly 11.8% (w/w) to 12.2% (w/w) of silicon, or to 12.0% (w/w) of silicon
   c. cooling said primary aluminium melt to below 660°C, particularly to 580°C to 620°C, over 5 to 50 hrs, whereby precipitates are formed, and said precipitates are separated from said cooled aluminium melt, whereby a secondary aluminium melt is obtained which is used in the aluminothermic step
- after solidification or
- directly in molten form.

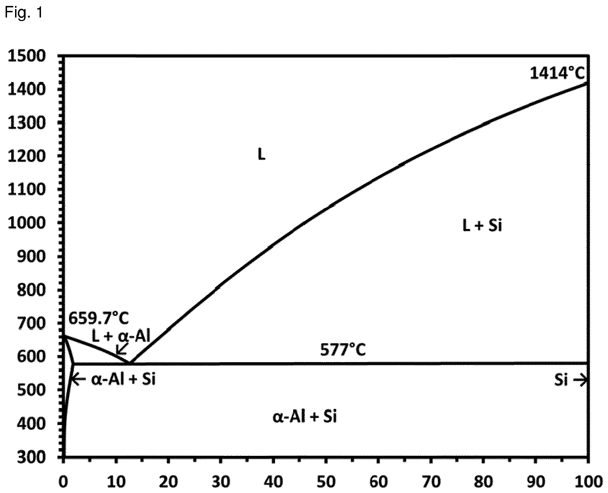

Advantageously, the content of silicon in the primary aluminium melt is determined initially, and silicon is added to about 12% Si (w/w) with respect to the Al content. At this point, the Al-Si system has the lowest melting point (eutectic point at 577 °C, see Fig. 1). It is desirable to cool the melt as much as possible in order to precipitate the compounds formed from impurities to the extent possible. These compounds formed from impurities have a low residual solubility at low temperature. Subsequently, the precipitates and the melt are separated from each other, yielding a very clean Al melt while the impurities are removed as precipitates.

Aluminium scrap comes in different alloys depending on the former use of the material. These alloys contain distinct alloying elements to provide ideal mechanical properties of the aluminium products. For instance there are very common alloys containing Mn, Mg, Cu, Si and Zn (e.g. "AlSi10MnMg") and parts made from these alloys further containing so called grain refiners, like Al-Ti-B and others.

In certain embodiments, specific combinations of mentioned alloys are co-melted and then cooled afterwards which results in the precipitation of intermetallic phases like Al-Ti-Si-compounds or borides like TiB₂. Other elements like Mg are selectively oxidized and transferred into the dross on top of the melt in form of MgO. Therefore the combination, co-melting and cooling of the mentioned alloys results in a purification effect, because compounds formed from impurities have a low residual solubility at low temperature.

The separation of precipitates and cooled melt is an important part of the process of purifying the aluminium. If the precipitates remain in the melt, they would re-dissolve during the next temperature elevation (e.g., during aluminothermic reduction) and release the precipitated impurities.

The sequence of steps a and b (providing the primary melt, combining the scrap alloys and adjusting of the Si content) is not important; the steps can also be performed in parallel or interchanged, as long as the target of joint melting of Al and a quantity of Si and other alloying elements is reached at high temperature, particularly at 800-900 ° C. All elements must be dissolved at high temperature in the Al melt in order to be precipitated subsequently upon cooling together with the impurities in step c. Solids floating only in the melt, would be ineffective.

In certain embodiments, said molten slag comprising an alkaline earth metal oxide and a silicon dioxide is provided by heating said alkaline earth metal oxide and said silicon dioxide to yield said molten slag, and said aluminium metal is added in step i
i.a as a solid composed of the secondary aluminium melt or
i.b as said secondary aluminium melt.

Alternatively, if both components (slag and aluminium) are present as a melt, the aluminium may be provided and the alkaline earth metal oxide slag may be added thereto.

In certain embodiments, said alkaline earth metal oxide and said silicon dioxide are added to said secondary aluminium melt
i.c as a mixture of said alkaline earth metal oxide and said silicon dioxide, in other words the two components are individually provided and added, either each individually to form a mixture in the melt, or advantageously, by mixing the two at ambient temperature in granular form and adding both components together, or
i.d as a solid slag obtained by forming a molten slag from said alkaline earth metal oxide and said silicon dioxide, and cooling said molten slag and grinding to lumps or grains to form said solid slag.

In certain embodiments, the content of silicon dioxide relative to the sum of silicon dioxide and alkaline earth metal oxide used in the aluminothermic step ranges from 40% to 88.5% (w/w for alkaline earth metal oxide being CaO), particularly from 47% to 57%, more particularly, the content of silicon dioxide relative to the sum of silicon dioxide and alkaline earth metal oxide is approximately 52% (w/w).

In certain embodiments, the aluminothermic step comprises a workup step for one of the two products silicon and slag, or for both. In this workup, the products of a primary aluminothermic step are reacted with fresh reactant to remove impurities. Specifically, the aluminothermic step is repeated to remove residual silicon dioxide from the aluminate slag, and to remove residual aluminium from the silicon, by performing one or both of the following steps:
i.e in an aluminothermic silicon workup step, the silicon obtained in the separation step is reacted with a molten slag comprising an alkaline earth metal oxide and a silicon dioxide, or an alkaline earth metal oxide and a silicon dioxide under conditions facilitating an aluminothermic reaction; thereby forming silicon and an alkaline earth metal oxide aluminate slag in separate phases; and/or
i.f in an aluminothermic slag workup step, the alkaline earth metal oxide aluminate slag obtained in the separation step is reacted with an aluminium metal obtained by the procedure specified in steps a, b and c of claim 1 under conditions facilitating an aluminothermic reaction;

In each workup reaction, silicon of oxidation state 0 and an alkaline earth metal oxide aluminate slag are formed in separate phases. The silicon and the alkaline earth metal oxide aluminate slag are then separated. In certain embodiments, the silicon derived of the aluminothermic silicon workup step is further processed by methods known in the art to yield ultra-high purity silicon.

In certain embodiments, the alkaline earth metal oxide aluminate slag derived of the aluminothermic slag workup step is further processed in the conversion step to yield high purity alumina.

Repetition of the aluminothermic step with the products from a previous aluminothermic step increases the yield of alumina and silicon at the end of the process, as unreacted species are converted to the respective product.

In certain embodiments, the conversion step comprises a Pedersen process step, by which
iii.a the alkaline earth metal oxide aluminate slag is treated in aqueous solution with alkali carbonate to yield an alkali aluminate containing solution and an alkaline earth metal carbonate, which remains as a precipitate, and
iii.b the alkaline earth metal carbonate is separated from the alkali aluminate containing solution;
iii.c the alkali aluminate containing solution is contacted with carbon dioxide, whereby an aluminium hydroxide precipitate and an alkali carbonate solution are formed;
iii.d the aluminium hydroxide precipitate is collected,
iii.e optionally, the alkali carbonate solution formed in step iii.c is re-used in step iii.a.

In certain embodiments, the alkali carbonate is sodium carbonate.

In certain embodiments, the alkali carbonate is potassium carbonate.

In certain embodiments, the alkaline earth metal carbonate is calcined to yield alkaline earth metal oxide and CO₂.

In certain embodiments, the conversion of alkaline earth metal carbonate to an alkaline earth metal hydroxide proceeds in aqueous solution.

In certain embodiments, the alkaline earth metal carbonate is converted to an alkaline earth metal hydroxide, wherein this conversion comprises
iii.f contacting the alkaline earth metal carbonate in aqueous solution with a transition metal compound, particularly with an iron compound, more particularly with iron(II)carbonate, wherein a reaction mixture is formed,
iii.g contacting of said reaction mixture with an acid, particularly with HCI(aq), whereby an alkaline earth metal chloride, in particular CaCl₂, solution containing 0.1-6% of a transition metal chloride, in particular FeCl₂, in solution forms, and whereby CO₂ forms,
iii.h subsequently adding a base, particularly ammonia or an alkali hydroxide, in particular sodium hydroxide, to said reaction mixture, to attain a pH of 3,0 - 9.5 but not higher than 9.5, particularly to a pH of 7.0 - 9.5, whereby a first basic solution and a precipitate of iron containing compounds are formed,
iii.i separating said first basic solution from said precipitate; particularly by filtration;
iii.j subsequently adding a base, particularly ammonia or an alkali hydroxide, (particularly: sodium hydroxide), to said first basic solution, to attain a pH increase of at least 1, to pH of 9.5 - 12.5, whereby a second basic solution and an alkaline earth metal hydroxide precipitate, (particularly: a calcium hydroxide precipitate) are formed,
iii.k isolation of said alkaline earth metal hydroxide precipitate (particularly: isolation of said calcium hydroxide precipitate),
iii.l calcination of said alkaline earth metal hydroxide precipitate, (particularly: calcination of said calcium hydroxide precipitate), yields the alkaline earth metal oxide (in particular calcium oxide).

In principle, this step of the process facilitates solubilisation of the group 2 metal carbonate, particularly CaCO₃, in acid, particularly in aqueous HCI. The CO₂ generated thereby can be re-fed into the process in the Pedersen process step in order to cut CO₂ emissions of the process. The solution generated thus is a group 2 metal salt solution, particularly a group 2 metal chloride salt solution; if the alkaline earth metal oxide employed is calcium oxide, the solution generated is a CaCl₂ solution.

The transition metal compound, particularly iron (II) carbonate, is added to a final content of 2-4% FeCl₂, wherein the 2-4% is in relation to the volume of a saturated FeCl₂ solution being added to the alkaline earth metal carbonate in aqueous solution. The iron can also be added as metallic iron to the alkaline earth metal carbonate, and will then convert to an iron salt upon exposure to the acid.

Upon raising the pH of the solution of the alkaline earth metal salt, particularly calcium chloride, in step iii.h, primarily impurities present in the mixture are precipitated as insoluble iron compounds, or co-precipitate with iron hydroxide as a flocculating agent in a process that can be seen as a fractionated precipitation, while the alkaline earth metal component remains in solution at below pH 9.5, which allows removing of the impurities. The pH of the alkaline earth metal, in particular calcium containing solution, is then further raised and the alkaline earth metal, in particular calcium, is precipitated as hydroxide, which as a result of the process is very clean and can be re-employed in the aluminothermic step after drying and calcination.

In certain embodiments, CO₂ is re-fed into the Pedersen process.

In certain embodiments, the process based on the Pedersen process further comprises a hydrometallurgical step, comprising
- a first HCI step, wherein the isolated aluminium(III)hydroxide precipitate is treated with concentrated aqueous hydrochloric acid, which yields a concentrated aluminium chloride solution and a precipitate of AlCl₃ hexahydrate,
- a dilution step, in which water is added to dissolve the AlCl₃ hexahydrate which yields a diluted aluminium chloride solution, leaving impurities as a solid residue;
- a first separation step, wherein said impurities are removed from said aluminium chloride solution;
- a second HCI step, wherein the diluted aluminium chloride solution is treated with gaseous hydrochloric acid to a final concentration of 25-30% HCI, which yields precipitate of AlCl₃ hexahydrate;
- a second separation step, wherein said precipitate of AlCl₃ hexahydrate is removed and collected;
   and
- calcination of the precipitate to yield alumina and hydrochloric acid (gas).

In certain embodiments, the hydrochloric acid (gas) is re-fed into the process..

In certain embodiments, the alkaline earth metal oxide aluminate slag obtained in the aluminothermic step is directly converted into aluminium(III)chloride hexahydrate in a slag conversion process. This process alternative, which can be employed instead of the Pedersen step, comprises the following steps:
- In a slag dissolving step, the alkaline earth metal oxide aluminate slag is contacted with aqueous HCI, particularly concentrated aqueous HCI, whereby a solution comprising aluminium(III)chloride and alkaline earth metal chloride is formed.
- In an aluminium(III)chloride hexahydrate precipitation step, the HCI concentration in the solution formed in the slag dissolving step is increased by contacting the solution with concentrated HCI, particularly with gaseous HCI, whereby aluminium(III)chloride hexahydrate is formed and precipitate. The alkaline earth metal chloride remains in solution.
- Finally, the aluminium(III)chloride hexahydrate precipitate is separated and calcinated, yielding alumina and gaseous HCI. The HCI may be reused in the aluminium(III)chloride hexahydrate precipitation step or in the earlier slag dissolving step.

In this way, the alkaline earth metal oxide aluminate slag obtained in the aluminothermic step is not treated in the Pedersen process step, but is directly converted into aluminium(III)chloride hexahydrate and subsequently calcined to alumina. The solution formed in the slag dissolving step may still be slightly acid after all slag has been dissolved. The alkaline earth metal chloride remains in solution in the aluminium(III)chloride hexahydrate precipitation step, as alkaline earth metal chlorides, particularly calcium chloride, have a higher solubility than aluminium(III)chloride hexahydrate at elevated concentrations of HCI.

In one embodiment, the aluminium(III)chloride precipitation step is repeated by re-dissolving the aluminium(III)chloride hexahydrate isolated in the precipitation step in water and contacting the obtained solution was gaseous HCI. The precipitated aluminium(III)chloride hexahydrate obtained by this repeat process is particularly pure.

In another embodiment, the alkaline earth metal chloride is converted into alkaline earth metal oxide by conversion of the dissolved alkaline earth metal chloride after the precipitation step to alkaline earth metal hydroxide under basic conditions. The alkaline earth metal hydroxide may be precipitated at elevated pH, isolated and calcined, yielding alkaline earth metal oxide, which may be re-fed into the aluminothermic step.

In this way, the process is even more resource and energy saving, as long purification steps may be omitted.

In certain embodiments, the process further comprises a purification of the separated silicon comprising the steps of
- surface etching of the silicon using an acid
- re-melting of the silicon
- directional solidification of the molten silicon
- top cutting of the solidified silicon
- and reusing the top cut in the aluminothermic step.

In certain embodiments,
- the silicon obtained by this process has a purity of more than 96%, particularly a purity of more than 99%, particularly a purity of more than 99.99% and even more particularly a purity of more than 99.9999%; and
- the alumina obtained by this process has a purity of more than 96%, particularly a purity of more than 99% and even more particularly a purity of more than 99.99%.

In certain embodiments, the alkaline earth metal oxide comprises or essentially consists of calcium oxide.

100% CaO is the most practical example due to cost and availability. Other group 2 element oxides might be employed, such as SrO, BaO or mixtures thereof. Employment of MgO will be limited to few if any applications, as the melting point of the resulting slag is high.

The process of the present invention is particularly energy efficient. The aluminothermic reduction step requires high temperatures; however, as this process may be run continuously, the heat energy generated during the exothermic aluminothermic reaction may be re-used to run the process, i.e. to melt the starting materials. Hence, part of the energy required for the process is generated during the process and does not need to be provided by external sources.

Further, the present invention is also particularly resource saving. Key components of the process, comprising the alkaline earth metal oxide, carbon dioxide, alkali carbonate and hydrochloric acid may be re-generated during the processes and may be re-fed into the reaction cycles. Therefore, the production process is practically free of waste and non-recycled resources.

The coupled production of silicon and alumina thus differs from existing processes by
- a reduction of impurities from Al-Si-alloys in one treatment;
- usage of this purified Al-Si-alloy to obtain silicon e.g. in an aluminothermic reduction process with clean input materials;
- use of the slag from this aluminothermic reduction process to obtain high-purity aluminum oxide by a combination of the Pederson process and a hydrometallurgy step;
- optionally recovery, purification and recycling of the other slag-ingredients;
- creating a coupled production of pure silicon and high purity aluminium oxide with internal recycling loops and low energy consumption; and
- Possible calcination of Ca(OH)₂ to form pure CaO

### Brief description of the figures

- Fig. 1: shows a phase diagram of Al and Si. The mass % of Si in an Al/Si composition is represented on the x-axis, whereas the temperature in °C is represented on the y-axis. The eutectic point of an Al/Si composition is found at 577°C for a composition of 12% (w/w) Si.
- Fig. 2: shows a schematic representation of the entire coupled process of the production of high purity silicon and aluminium oxide.
- Fig. 3: shows a schematic representation of the conversion step starting from the alkaline earth metal oxide aluminate slag to aluminium oxide.
- Fig.4: shows a detailed representation of the Pedersen process and the hydrometallurgical step.
- Fig.5: shows an aluminothermic reduction work up step, where the separated phases of silicon and alkaline earth metal oxide aluminate slag are each treated again under aluminothermic reduction conditions to bring unreacted aluminium and silicon dioxide to reaction.

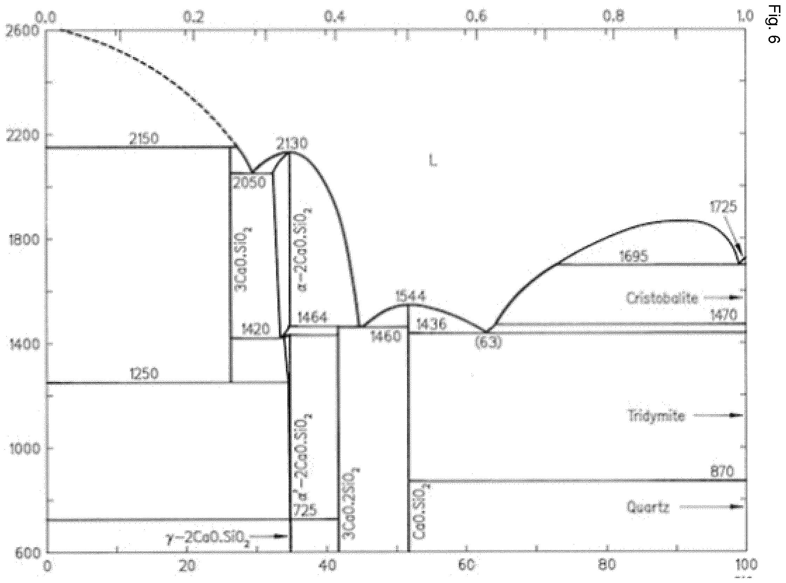

- Fig. 6: shows a phase diagram of CaO and SiO_{2.} The mass % of SiO₂ in the CaO/SiO₂ composition is represented on the lower x-axis, the mol fraction of SiO₂ is represented on the upper x-axis, whereas the temperature in °C is represented on the y-axis.

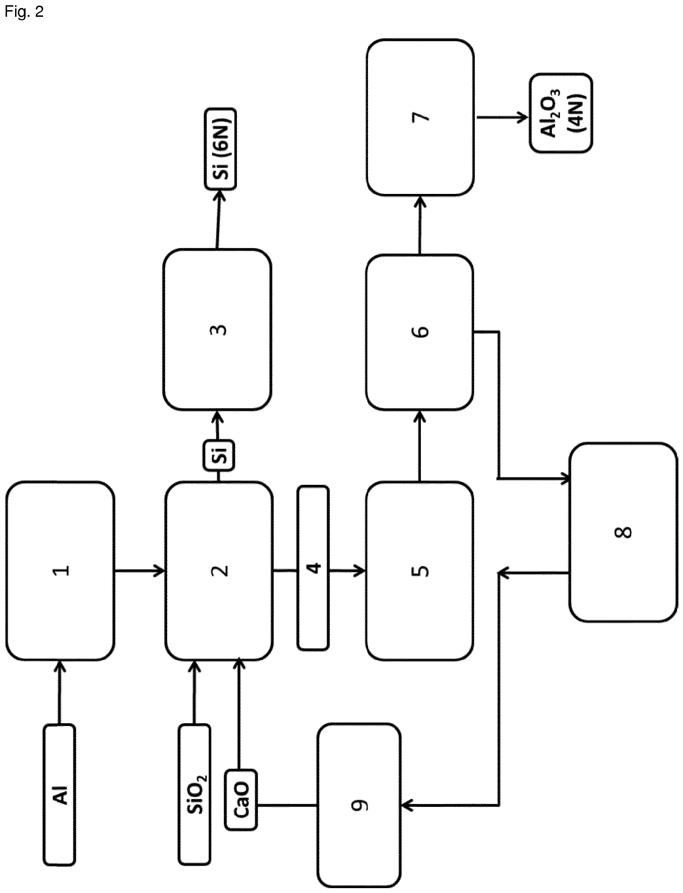

Fig. 2 shows an embodiment of the coupled process of producing silicon and aluminium oxide.

In certain embodiments, the process starts with the purification of an aluminium metal (1), whereby the aluminium metal may be provided in the form of pure aluminium, in the form of aluminium scrap and in the form of aluminium alloys and mixtures. In one embodiment of the present invention, the aluminium is adjusted to contain further additives, in particular silicon and the alloying elements found in different combinations in aluminium scrap. The aluminium comprising said additives is molten in a high temperature furnace, whereby a primary aluminium melt is formed. This primary aluminium melt is slowly cooled down. During this cooling process, the impurities precipitate and sink to the ground or grow at the crucible walls, whereby a secondary aluminium melt is formed as one phase and the impurities remain in a second phase. The secondary aluminium melt may thus be separated from the impurities by methods comprising decanting, solidification and cutting, filtration, impelling of liquid salt flux and removing flux from melt. These methods are known to a person skilled in the art.

In a further embodiment of the present invention, the content of the additives in the aluminium is controlled by a control unit, whereby the control unit is configured to quantify chemical elements. In a further embodiment of the present invention, the temperature of the primary and secondary aluminium melt is controlled by a thermocouple during the purification step (1).

In a second step, silica and an alkaline earth metal oxide, in particular calcium oxide, are molten in a vessel in a furnace, whereby a molten (alkaline earth metal oxide)-silica slag is formed. The secondary aluminium melt of process (1) is added to this molten or solidified slag in molten or solidified form, whereby an aluminothermic reduction (2) starts. During the aluminothermic reduction (2), silicon dioxide is reduced to silicon at the same time as aluminium is oxidized, whereby an alkaline earth metal oxide aluminate slag (4) forms. This reaction is exothermic and thereby heat is generated. In one aspect of the present invention, this reaction is run continuously and the heat required for the reaction is produced by the reaction itself, thereby reducing the total energy consumption of the process.

One aspect of this reaction is that the alkaline earth metal oxide aluminate slag (4) and silicon form two distinct phases and may be separated mechanically, in particular by decanting, solidification and cutting or draining. The alkaline earth metal oxide aluminate slag (4) and silicon formed during the aluminothermic reduction (2) are treated separately in the further course of the process of the invention.

Silicon is further purified (3), whereby high purity silicon is obtained. This purification step is however optional, as also silicon of lower purity may be produced within this process.

Possible purification methods (3) of the silicon comprise the steps of
- surface etching of the silicon using an acid
- re-melting of the silicon
- directional solidification of the molten silicon
- top cutting of the solidified silicon
- and reusing the top cut.

The alkaline earth metal oxide aluminate slag (4) is solidified and crushed (5). Possible methods of crushing (5) are milling and sifting.

The alkaline earth metal oxide aluminate slag (4) is further reacted in a Pedersen process (6) and by hydrometallurgical work up (7) to yield aluminium oxide and alkaline earth metal carbonate. The alkaline earth metal carbonate is purified (8) prior to calcination to alkaline earth metal oxide, which is then re-fed into the process.

The purification (8) of the alkaline earth metal carbonate involves the conversion of the alkaline earth metal carbonate to an alkaline earth metal hydroxide. The alkaline earth metal carbonate is contacted with HCI in solution, to yield alkaline earth metal chloride and carbon dioxide. The carbon dioxide may be re-fed into the Pedersen process. Further, a transition metal carbonate or a transition metal, in particular iron carbonate or iron, is added to the solution of the alkaline earth metal chloride, whereby an iron containing solution of alkaline earth metal chloride is formed. The pH of this iron containing alkaline earth metal chloride solution is increased, whereby iron containing impurities precipitate. These precipitates are removed from the solution. When the pH is increased further, very pure alkaline earth metal hydroxide precipitates which is converted to alkaline earth metal oxide by calcination (9).

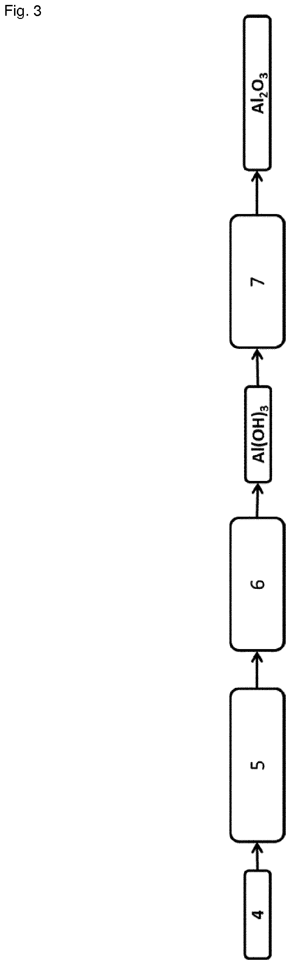

In Fig. 3, the conversion of the alkaline earth metal oxide aluminate slag (4) to aluminium oxide is further detailed. The solidified slag is crushed, whereby the crushing comprises milling and/or sifting. The slag (4) is solidified and crushed (5) and further treated in a Pedersen process (6), yielding aluminium(III)hydroxide and alkaline earth metal carbonate. Aluminium(III)hydroxide is further reacted in an acid treatment (7) to yield aluminium oxide.

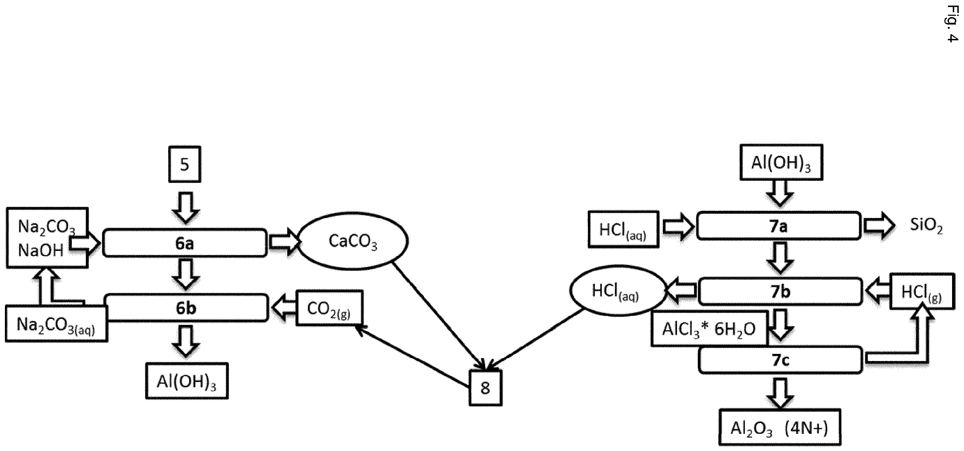

In Fig. 4, the details of the Pedersen process (6) and the acid treatment (7) are illustrated. In the Pedersen process, the crushed and solidified alkaline earth metal oxide slag (5) is treated in aqueous basic conditions (6a). The basic conditions (6a) are a result of a treatment of the slag with aqueous alkali carbonate, in particular sodium or potassium carbonate, whereby aluminate is dissolved as alkali aluminate. Further, an alkaline earth metal carbonate is formed, which precipitates from the aqueous basic solution. Thus, the alkali aluminate remains in the solution and may be separated from the alkaline earth metal carbonate by methods known to the person skilled in the art. The remaining solution containing the alkali aluminate is treated further with carbon dioxide, whereby aluminium(III)hydroxide precipitates (6b) and alkali carbonate remains in the solution.

The precipitated aluminium(III)hydroxide may be recovered from the solution by methods known in the art. Particular methods comprise filtration and decanting. Alkali carbonate is recovered from the solution by methods known in the art and re-fed into the process.

In the hydrometallurgical step (7), the aluminium(III)hydroxide isolated in the Pedersen process (6) is treated with an acid, in particular with HCI (7a), whereby alumium(III)chloride and aluminium(III)chloride hexahydrate form, whereby the aluminium(III)chloride hexahydrate precipitates. The precipitated aluminium(III)chloride hexahydrate is re-dissolved by addition of water, whereby a solution and possibly remaining precipitates are formed, whereby the remaining precipitates are removed from the solution. The solution is treated with further acid (7b), in particular with HCI (gas), to salt out aluminium(III)chloride hexahydrate, whereby aluminium(III)chloride hexahydrate precipitates. The precipitated aluminium(III)chloride hexahydrate is isolated from the solution by methods known in the art. The isolated aluminium(III)chloride hexahydrate is calcined (7c) to aluminium oxide in a two-step procedure, wherein Aluminium(III)hydroxide is formed at temperatures between 300-400°C, particularly at temperatures between 300-350°C, whereby HCI (gas) is recovered. Aluminium(III)hydroxide is converted to aluminium oxide at temperatures in the range 900-100°C, in particular at 1000°C.

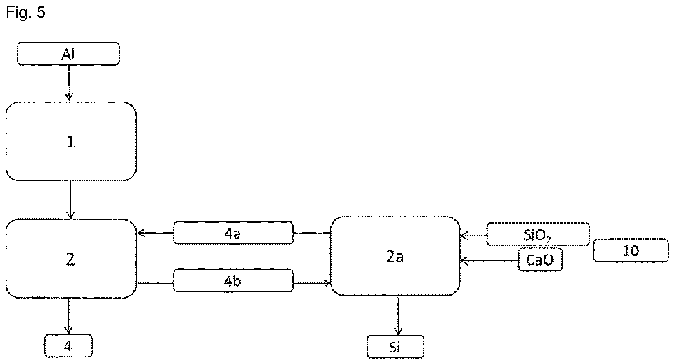

In Fig. 5, an embodiment of the present invention is represented, wherein aluminium and SiO₂ and alkaline earth metal oxide are treated in an aluminothermic reduction (2) after purification of aluminium (1). Separation of the two phases after the aluminothermic reduction yields an alkaline earth metal oxide aluminate slag with residual SiO₂ (4a) and silicon with residual amounts of aluminium (4b). Both phases are separately subjected a second time to an aluminothermic reduction (2a) with either fresh aluminium (in the case of 4a) and fresh SiO₂ / alkaline earth metal oxide or fresh SiO₂/alkaline earth metal oxide slag (10) (in the case of 4b) in order to increase the yield of alumina and silicon at the end of the process.

Wherever alternatives for single features are laid out herein as "embodiments", it is to be understood that such alternatives may be combined freely to form discrete embodiments of the invention disclosed herein.

The invention is further illustrated by the following examples and figures, from which further embodiments and advantages can be drawn.

### Reference characters

- 1: Purification of aluminium
- 2: Aluminothermic reduction
- 2a: Aluminothermic reduction II
- 3: Purification of silicon
- 4: Alkaline earth metal oxide aluminate slag
- 4a: Alkaline earth metal oxide aluminate slag with residual SiO₂
- 4b: Silicon with residual aluminium
- 5: Milling/Stifting
- 6: Pedersen process
- 6a: Alkaline leaching
- 6b: Precipitation
- 7: Hydrometallurgical treatment of aluminium oxide precursor
- 7a: Acid treatment
- 7b: Precipitation
- 7c: Calcination
- 8: Purification of alkaline earth metal oxide precursor
- 9: Recovery of alkaline earth metal precursor
- 10: fresh alkaline earth metal oxide-SiO₂ slag which may be added optionally

### Examples

### Example 1 - General process overview

A cost efficient way to produce raw silicon precursors with low B, P and other impurities as well as an aluminate precursor with low alkali and other metal content, would greatly simplify additional purification to solar silicon and high purity aluminium oxide. An aluminothermic reduction of SiO₂ sands realizes this, if it is carried out like proposed in the following.
- Obtain clean ingredients:
   ∘ SiO₂ sands low in contaminants are available at the market
   ∘ Scrap - aluminum or Al-Si can be cleaned from impurities using our method
- Then use this Al or Al-Si to reduce SiO₂ to make silicon low in impurities via an aluminothermic reduction. The aluminium will also reduce other metals present in the melt. These metals will stay in the silicon therefore purifying the residual Aluminate from metals.
- Use the aluminate-slag (low in metals) created during the aluminothermic reduction as a synthetic precursor to make high purity alumina
- Use hydrometallurgical processing to make high purity aluminium oxide from obtained slag and thereby recycle/recover the slag ingredients
- Create a coupled production of pure silicon and high purity aluminium oxide with internal recycling loops and low energy consumption.

### Example 2 -Al-Si purification

- Melt Al, Al-scrap or a combination of different aluminium alloys with 8-14% (w/w) Si at 800-900°C
- Slowly cool the obtained melt to 580 to 620°C in 8 to 48h to precipitate out impurities
- Separate solids from the clean liquid by the following methods: decanting, solidification and cutting, filtration, impelling of liquid salt flux and removing flux from melt

### Example 3 - Aluminothermic reduction

- Melt a pure CaO-SiO₂ slag from lime and silica (approx. 1:1 ratio, variations)
- Also possible are MgO-SiO₂ slag, SrO-SiO₂ slag, BaO-SiO₂ slag
- add purified Al-Si for aluminothermic reduction
- separate the formed Si/metal melt and aluminate slag
- might be repeated with resulting Si/metal melt and fresh input of slag
- slag of this step can be used a 2^{nd} time
- establish counter-flow principle: fresh slag is reacted with Si-rich melt from a run which was carried out with spent slag and fresh Al-Si as an input

### Example 4 - Further processing of Si isolated from aluminothermic reduction

- surface etch/leach Si- chunks from the aluminothermic reduction using HCI, use spent HCI in conversion of CaCO₃ to Ca(OH)₂
- remelting of this Si
- directional solidification
- top-cut the ingot and chunk the material
- creation of recycling and re-processing loops within this processing step

### Example 5 - Processing of calcium oxide aluminate-slaa

- crushing and milling
- use Pedersen process to recover CaO (as CaCO₃) and produce Al(OH)₃
- dissolve the Al(OH)₃ in HCI and follow the HCI route as described in EP0157503B1

### Example 6 - Pedersen process (see Fig. 4, left)

1) Crushing and pulverizing of the alkaline earth metal oxide aluminate slag.
2) Dissolving of 130 g Na₂CO₃ in 1 L of deionized water.
3) Stirring of 300 g of aluminate slag (4) in the solution prepared in the aluminothermic reduction for 1.5 h at 90°C.
4) A strongly basic sodium aluminate solution is formed as well as a solid precipitate. The precipitate is expected to contain undissolved impurities as well as CaCO₃.
5) Removing the precipitate by filtration.
6) Introducing CO₂(g) into the obtained clear solution of the previous step, causing Al(OH)₃ to precipitate. Isolation of the precipitate from the solution by filtration.
7) Repeating steps 3) to 6) with the remaining basic solution of step 6) and with the precipitate of step 5). No new aluminate slag shall be used in this step, only the precipitates isolated from step 5). Here, further Al(OH)₃ shall be isolated from the slag.
8) Washing and drying of combined isolated Al(OH)₃.
9) The as-obtained Al(OH)₃ will be reacted further as described below.

### Example 7 - Hydrometallurgical treatment of aluminium oxide precursor (see Fig. 4 right)

1) 156.6 g of Al(OH)₃ is dissolved in 610 mL of HCI (aq) (36% (w/w)) under constant stirring at 60 °C.
2) A solution of aluminium(III)chloride is expected to form that reacts slightly acid as well as a solid residue, comprising and essentially consisting of AlC₃·6H₂O. Al(OH)₃ reacts to AlCl₃·6H₂O in the presence of HCI, however, it is not completely soluble given the small amounts of liquid.
3) 92 mL of H₂O are added in order to dissolve the remaining AlCl₃·6H₂O. The solution is cooled down to room temperature.
4) Remove remaining solids in the solution by filtration.
5) HCI (g) is introduced into the solution in order to salt out AlC₃·6H₂O. However, the concentration of HCI in the solution shall not exceed 30% (w/w), as impure AlCl₃·6H₂O would precipitate consequently. The optimum conditions comprise 25-28.5% (w/w) of HCI in the solution. Precipitated AlCl₃·6H₂O is isolated by filtration.
6) AlCl₃·6H₂O is washed with concentrated HCI, separated and dried. AlCl₃·6H₂O melts at 100°C and starts to decompose at this temperature, forming HCI. If further heated, Al(OH)₃ is formed, which releases water above 400°C and reacts to Al₂O₃.
7) Converting the AlCl₃·6H₂O from step 6 to Al(OH)₃ on a hotplate at 300-350°C under a HCI suitable ventilation hood.
8) The as-obtained Al(OH)₃ is reacted in a furnace at 1000 °C for 1 h to yield Al₂O₃.

### Example 8 - further processing of CaCO₃ after Pedersen process

- adding some FeCO₃ or Fe-metal
- dissolving in HCI and recover CO₂ for using in step 4 (Pedersen)
- separating solids and liquid
- increasing pH by NH₄ or NaOH or optional addition to precipitate impurities (Fe-hydroxide, Phosphides, Borides etc.)
- separating solids and liquid
- fully increase pH to precipitate Ca(OH)₂
- separating solids and liquid

## Claims

1. A process for the production of silicon and alumina comprising the following steps:
i. In an aluminothermic step, contacting an aluminium metal with
- a molten slag comprising an alkaline earth metal oxide and a silicon dioxide, or
- an alkaline earth metal oxide and a silicon dioxide particularly wherein the alkaline earth metal oxide comprises or essentially consists of calcium oxide,
under conditions facilitating an aluminothermic reaction; thereby forming silicon and an alkaline earth metal oxide aluminate slag in separate phases;
ii. separating the silicon and the alkaline earth metal oxide aluminate slag in a separation step;
iii. in a conversion step, converting the alkaline earth metal oxide aluminate slag to alumina and alkaline earth metal oxide, wherein said alkaline earth metal oxide is re-fed in the aluminothermic step;
**characterized in that**
the aluminium metal of the aluminothermic step is provided by a procedure comprising the steps of
- melting of aluminium scrap or a combination of different aluminium alloys to yield a primary aluminium melt, particularly at a temperature of 700 to 1000°C, more particularly 800°C to 900°C;
- adjusting said primary aluminium melt to a content of
- 8 to 14% (w/w) of silicon, particularly 11.5% to 12.5% of silicon, more particularly 11.8% to 12.2% of silicon, or to 12.0% of silicon
- cooling said primary aluminium melt to below 660°C, particularly to 580 to 620°C, over 5 to 50 hrs, whereby a precipitate is formed, and said precipitate is separated from said aluminium melt, whereby a secondary aluminium melt is obtained which is used in the aluminothermic step
- after solidification or
- directly in molten form.

2. The process according to claim 1, wherein said molten slag comprising an alkaline earth metal oxide and a silicon dioxide is provided by heating said alkaline earth metal oxide and said silicon dioxide to yield said molten slag, and said aluminium metal is added
i.a. as a solid or
i.b. as said secondary aluminium melt.

3. The process according to claim 1, wherein said alkaline earth metal oxide and said silicon dioxide are added to said secondary aluminium melt
i.e. as a mixture of said alkaline earth metal oxide and said silicon dioxide, or
i.d. as a solid slag obtained by forming a molten slag from said alkaline earth metal oxide and said silicon dioxide, and cooling said molten slag to form said solid slag.

4. The process according to any one of the preceding claims, wherein the content of silicon dioxide relative to the sum of silicon dioxide and alkaline earth metal oxide used in the aluminothermic step ranges from 40% to 88.5% (w/w for alkaline earth metal oxide being CaO), particularly from 47% to 57%, more particularly wherein the content of silicon dioxide relative to the sum of silicon dioxide and alkaline earth metal oxide is approximately 52% (w/w).

5. The process according to any one of the preceding claims, wherein the aluminothermic step is repeated to remove residual silicon dioxide from the aluminate slag, and to remove residual aluminium from the silicon, by performing one or both of the following steps:
i.e. in an aluminothermic silicon workup step, the silicon obtained in the separation step is reacted with a molten slag comprising an alkaline earth metal oxide and a silicon dioxide, or an alkaline earth metal oxide and a silicon dioxide under conditions facilitating an aluminothermic reaction; thereby forming silicon and an alkaline earth metal oxide aluminate slag in separate phases; and/or
i.f. in an aluminothermic slag workup step, the alkaline earth metal oxide aluminate slag obtained in the separation step is reacted with an aluminium metal obtained by the procedure specified in steps a, b and c of claim 1 under conditions facilitating an aluminothermic reaction;
thereby in each reaction forming silicon of oxidation state 0 and an alkaline earth metal oxide aluminate slag in separate phases;
separating the silicon and the alkaline earth metal oxide aluminate slag.

6. The process according to any one of the preceding claims, wherein the conversion step comprises a Pedersen process step, by which
iii.a. the alkaline earth metal oxide aluminate slag is treated with alkali carbonate to yield an alkali aluminate containing solution and an alkaline earth metal carbonate, and
iii.b. the alkaline earth metal carbonate is separated from the alkali aluminate containing solution;
iii.c. the alkali aluminate containing solution is contacted with carbon dioxide, whereby an aluminium hydroxide precipitate and an alkali carbonate solution are formed;
iii.d. the aluminium hydroxide precipitate is collected,
iii.e. optionally, the alkali carbonate solution formed in step iii.c. is re-used in step iii.a.

7. The process according to claim 6, wherein the alkali carbonate is sodium carbonate or potassium carbonate, particularly sodium carbonate..

8. The process according to any one of claims 6 to 7, wherein the alkaline earth metal carbonate is calcined to yield alkaline earth metal oxide and CO₂.

9. The process according to any one of claims 6 to 8, wherein the alkaline earth metal carbonate is converted to an alkaline earth metal hydroxide, wherein this conversion comprises
iii.f. contacting the alkaline earth metal carbonate with a transition metal compound, particularly with an iron compound, more particularly with iron(ll)carbonate, wherein a reaction mixture is formed,
iii.g. contacting of said reaction mixture with an acid, particularly with HCI(aq),
iii.h. subsequently adding a base, particularly ammonia or an alkali hydroxide, particularly sodium hydroxide, to said reaction mixture, to attain a pH of 3.0 - 9.5 but not higher than 9.5, particularly to pH of 7.0 - 9.5, whereby a first basic solution and a precipitate are formed,
iii.i. separating said first basic solution from said precipitate; particularly by filtration;
iii.j. subsequently adding a base, particularly ammonia or an alkali hydroxide (particularly sodium hydroxide), to said first basic solution, to attain a pH increase of at least 1, to pH of 9.5 - 12.5, whereby a second basic solution and an alkaline earth metal hydroxide, (particularly: calcium) hydroxide precipitate, are formed
iii.k. isolation of said alkaline earth metal hydroxide (particularly: calcium) hydroxide precipitate,
iii.l. calcination of said alkaline earth metal hydroxide, (particularly: calcium) hydroxide precipitate to form said alkaline earth metal oxide.

10. The process according to claim 8 or 9, wherein CO₂ generated by calcination of the alkaline earth metal carbonate is re-fed into the Pedersen process step.

11. The process according to claim 6 to 10, further comprising
- a first HCI step, wherein the aluminium(III)hydroxide precipitate is treated with concentrated aqueous hydrochloric acid, which yields a concentrated aluminium chloride solution and a precipitate of AlCl₃ hexahydrate,
- a dilution step, in which water is added to dissolve the AlCl₃ hexahydrate which yields a diluted aluminium chloride solution, leaving impurities as a solid residue;
- a first separation step, wherein said impurities are removed from said aluminium chloride solution;
- a second HCI step, wherein the diluted aluminium chloride solution is treated with gaseous hydrochloric acid to a final concentration of 25-30% HCI, which yields precipitate of AlCl₃ hexahydrate;
- a second separation step, wherein said precipitate of AlCl₃ hexahydrate is removed and collected; and
- calcination of the precipitate to yield alumina and hydrochloric acid (gas).

12. The process according to claim 11, whereby the hydrochloric acid (gas) generated in the calcination of the precipitate is re-used in the first HCI step and/or the second HCI step.

13. The process according to any one of claims 1 to 5, wherein the alkaline earth metal oxide aluminate slag is directly converted into alumina in a slag conversion process comprising
- a slag dissolving step, wherein the alkaline earth metal oxide aluminate slag is contacted with aqueous HCI, particularly concentrated aqueous HCI, whereby a solution comprising aluminium(III)chloride and alkaline earth metal chloride is formed,
- an aluminium(III)chloride hexahydrate precipitation step, comprising contacting the solution formed in the slag dissolving step with concentrated HCI, particularly with gaseous HCI, whereby aluminium(III)chloride hexahydrate is formed and precipitated and whereby the alkaline earth metal chloride remains in solution,
- separating and calcinating the aluminium(III)chloride hexahydrate precipitate, yielding alumina and gaseous HCI.

14. The process according to claim 13, wherein the alkaline earth metal chloride is converted into alkaline earth metal hydroxide under basic conditions, wherein the alkaline earth metal hydroxide is isolated and calcined to yield alkaline earth metal oxide, which is reused in the aluminothermic step.

15. The process according to any one of the preceding claims, wherein said primary aluminium melt is a combination of aluminium alloys containing elements selected from Mn, Mg, Cu, Si and Zn or a combination thereof (e.g. "AlSi10MnMg") or parts made from these alloys further containing so called grain refiners, particularly Al-Ti-B.
